# EUROPEAN PATENT APPLICATION

(11) **EP 2 023 273 A1**
(43) Date of publication of application: **11.02.2009**
(21) Application number: 07742285.5
(22) Date of filing: 24.04.2007
(51) Int. Cl.: G06K 19/07, B21C 51/00, G06K 17/00, G06K 19/00, G06K 19/077

(54) **STRUCTURE FOR ATTACHING RFID TAG AND METHOD FOR DETECTING RFID TAG**

(30) Priority: 01.05.2006 JP 2006127753
(71) Applicant: Kabushiki Kaisha Kobe Seiko Sho, Chuo-ku Kobe-shi Hyogo 651-8585 (JP)
(72) Inventor: KEGASA, Koyo, (JP); MANABE, Chitaka, (JP); TAMURA, Naoki, (JP); SAKAI, Hidenori, (JP); MATSUDA, Kouichi, (JP); IWASA, Yuichi, (JP)
(74) Representative: Charlton, Peter John
(86) International application number: PCT/JP2007/058850
(87) International publication number: WO 2007/129569

(57) **Abstract**

The present invention provides a structure for attaching an RFID tag in a disposition allowing an easy detection by an external RFID reader, the structure preventing the RFID tag from being broken for a normal specification, and a method for detecting an RFID tag. The structure for attaching an RFID tag to a hollow cylindrical metal body is **characterized in that** the RFID tag is attached to an inner side of the hollow cylindrical metal body via a spacer between it and a metal surface such that a direction in which an electric field of the RFID tag is generated is in a direction along a circumference of the hollow cylindrical metal body.

## Description

### TECHNICAL FIELD

The present invention relates to a structure for attaching an RFID tag for identifying a hollow cylindrical metal body to the hollow cylindrical metal body and a method for detecting the attached RFID tag, and in particular, to a structure for attaching an RFID tag and a method for detecting the same which are capable of preventing breakage of the RFID tag and improving detection accuracy for the RFID tag.

### BACKGROUND ART

FIG. 6 shows a structure for attaching an RFID tag to a metal body introduced in Patent Document 1.
A spacer 230 having a thickness of 1 mm is pasted to the outer side of a metal body 1 (on the left side in the drawing), and an RFID tag 11 is bonded thereon via an adhesive agent 23. An antenna pattern 112 of the RFID tag 11 on the lower side in the drawing contacts the metal body 1 in a container shape via the adhesive agent 23, and an antenna pattern 111 of the RFID tag 11 on the upper side in the drawing contacts the spacer 230 via the adhesive agent 23.
In this way, when at least the antenna pattern 112 on one side floats through the spacer 230 from the metal body 1, there are no cases in which a great resonance frequency shift of the antenna is brought about, which allows it to respond to a radio wave from a reader.
Patent Document 1: Japanese Published Examined Patent Application No. 2002-259934

### DISCLOSURE OF THE INVENTION

### PROBLEMS THAT THE INVENTION IS TO SOLVE

Meanwhile, in the conventional structure for attaching an RFID tag as described above, because the RFID tag is located outside the metal body, the RFID tag collides with another metal body or a peripheral object or is pressed against a floor or a wall to be broken in some cases.
In a case in which the metal body is heavy and many metal bodies are piled up to be stored, in particular, breakages easily occur.
For example, in a case in which the metal body is a heavy steel wire rod coil having a diameter of 120 cm, a length of 140 cm, and a weight of 2 tons, and the metal bodies are piled up in two stages in a warehouse in some cases, this easily breaks the RFID tag sandwiched therebetween.
In order to avoid the breakage, the RFID tag is preferably attached to the inner side of the metal body. However, when the RFID tag is attached to the inner side of the metal body, the RFID tag cannot be detected by an external RFID reader in many cases depending on the ways of attaching it, and a device is required in order to reliably detect the RFID tag from the outside.
Accordingly, the present invention has been achieved in consideration of the above-described circumstances, and an object of the present invention is to provide a structure for attaching an RFID tag in a disposition allowing an easy detection by an external RFID reader, the structure preventing the RFID tag from being broken during normal use, and a method for detecting an RFID tag.

### MEANS FOR SOLVING THE PROBLEMS

In order to achieve the above-described object, the present invention is a structure for attaching an RFID tag to a hollow cylindrical metal body, on the assumption that the RFID tag is attached to an inner side of the hollow cylindrical metal body. According to this, even if the hollow cylindrical metal bodies contact each other, the RFID tags are not damaged in any case. Further, the RFID tag is attached to the inner side of the hollow cylindrical metal body via a spacer between it and the metal surface such that a direction in which an electric field of the RFID tag is generated is along a circumference of the hollow cylindrical metal body.
A magnetic body, a dielectric body, or the like can be used as the spacer.
To mention examples as the dielectric body, there is a low-dielectric material such as foamed polyethylene or foamed polystyrene, a medium-dielectric material such as polyethylene, polystyrene, or epoxy, or a high-dielectric body such as ceramics or barium titanate, and the like.
Further, as examples as the magnetic body, there is ferrite, iron, nickel, and the like.
Note that, when metal such as iron or nickel is used as the magnetic body, in order to reduce eddy-current loss, the metal is formed into a thin plate (thin film) and is insulated to be laminated, or the metal is reduced to powder to be solidified with a resin such as epoxy, to be used.
Generally, there is an advantage that a lightweight and inexpensive body can be obtained from a low-dielectric material.
When a high-dielectric material is used, because a wavelength of a radio wave inside the dielectric body is inversely proportional to a square root of its dielectric constant, there is an advantage that it can be made to have smaller dimensions with the same wavelength.
A spacer using a magnetic body has an advantage that it can be made thin to have smaller dimensions. However, because the spacer is affected by eddy-current loss, the spacer is used at a relatively low frequency in many cases.
Because the RFID tag is attached via the spacer between it and the metal surface in this way, it is possible to efficiently configure a communication circuit between it and the external antenna.
The RFID reader antenna for detecting an RFID tag as described above is installed to be along one of the circumferential direction and the direction of the central axis of the hollow cylindrical metal body.
When the RFID reader antenna is installed in the circumferential direction, when the RFID reader antenna is located outside the hollow cylindrical metal body as will be described later, it is possible to detect the RFID tag with high detection accuracy. On the other hand, when the direction in which the RFID tag is installed is the direction of the central axis of the hollow cylindrical metal body, an antenna pattern of the RFID tag is disposed along a direction of an electric field of a standing wave of a radio wave inside the cylinder generated by a radio wave from the RFID reader antenna. Therefore, when the RFID reader antenna is inserted into the hollow cylindrical metal body to reach a point directly above the RFID tag, it is possible to efficiently detect the RFID tag. This case is convenient for a case in which a plurality of RFID tags to be aligned are sequentially detected.

As a typical example of the hollow cylindrical metal body, a wire rod coil can be cited.
In a case in which the hollow cylindrical metal body is a wire rod coil as in this case, the RFID tag is preferably attached to a hoop material binding the wire rod coil. Because the wire rods are in friction with each other or collide with each other due to changes in positions at the time of transferring the wire rods, if an RFID tag is attached to the wire rods, the RFID tag may be damaged thereby. However, if the RFID tag is attached to the hoop binding the wire rods, the hoop is steel, which is strong, and the hoop itself does not generate contact and collision with the wire rods, there is no disadvantage that the RFID tag is damaged even at the time of transferring the wire rods.

Further, as a method for detecting the RFID tag which is preferred for a case in which the structure for attaching an RFID tag as described above is adopted, a method for detecting the RFID tag attached to an inner side of a hollow cylindrical metal body characterized in that an RFID reader antenna is inserted into the hollow cylindrical metal body to detect the RFID tag, is conceivable.
It is a matter of course that detection accuracy for the RFID tag is dramatically improved by inserting the RFID antenna into the hollow cylindrical metal body.
Moreover, in a case in which RFID tags are sequentially detected with respect to a plurality of hollow cylindrical metal bodies, the plurality of hollow cylindrical metal bodies in which the RFID tags are attached to the insides are coaxially disposed, and the RFID reader antenna is inserted into the hollow cylindrical metal bodies, to detect the RFID tags in the order in which the hollow cylindrical metal bodies are aligned.

### ADVANTAGES OF THE INVENTION

According to the present invention, a structure for attaching an RFID tag in a disposition allowing an easy detection by an external RFID reader, the structure preventing the RFID tag from being broken during normal use, and a method for detecting an RFID tag are provided.

### BRIEF DESCRIPTION OF THE DRAWINGS

[FIG. 1] FIG. 1 is a schematic diagram illustrating the configuration of the present invention in a case in which an RFID tag is attached so as to be in a direction along a circumferential direction of a cylindrical metal body to an inner side of the cylindrical metal body.
[FIG. 2] FIG. 2 is a schematic diagram illustrating the configuration of the present invention in a case in which the RFID tag is attached so as to be parallel to a central axis of the cylindrical metal body to the inner side of the cylindrical metal body.
[FIG. 3] FIG. 3 is a schematic diagram showing a situation in which the RFID tag in the configuration of the present invention is irradiated with a radio wave of an RFID reader antenna from the outside of the cylindrical metal body.
[FIG. 4] FIG. 4 is a schematic diagram showing a situation in which a crane arm on which the RFID reader antenna is attached to its leading end is inserted into a plurality of coaxial cylindrical metal bodies to detect RFID tags in order.
[FIG. 5] FIG. 5 is a photograph in place of a drawing in which an RFID tag is mounted via a spacer on a hoop inside a steel wire rod coil bound by four hoops.
[FIG. 6] FIG. 6 is a sectional view showing a state in which an RFID tag is mounted in a conventional embodiment. DESCRIPTION OF REFERENCE NUMERALS AND SIGNS

4: Hollow cylindrical metal body
5: RFID reader
6: Coaxial cable
7: RFID reader antenna
8: Crane arm for moving wire rod coils
9: Binding hoop
11: RFID tag
23: Adhesive agent
111: Antenna pattern
112: Antenna pattern
230: Spacer

### BEST MODE FOR CARRYING OUT THE INVENTION

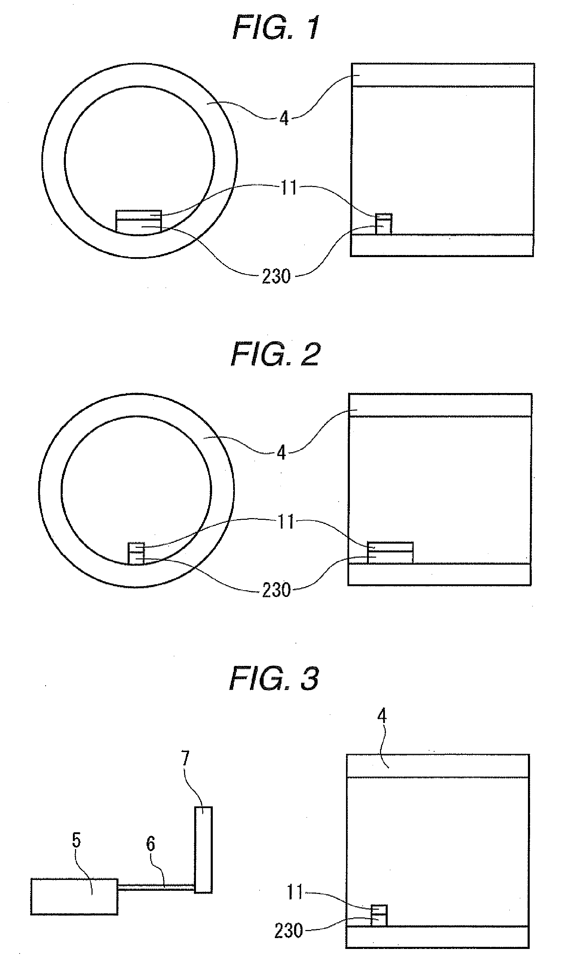

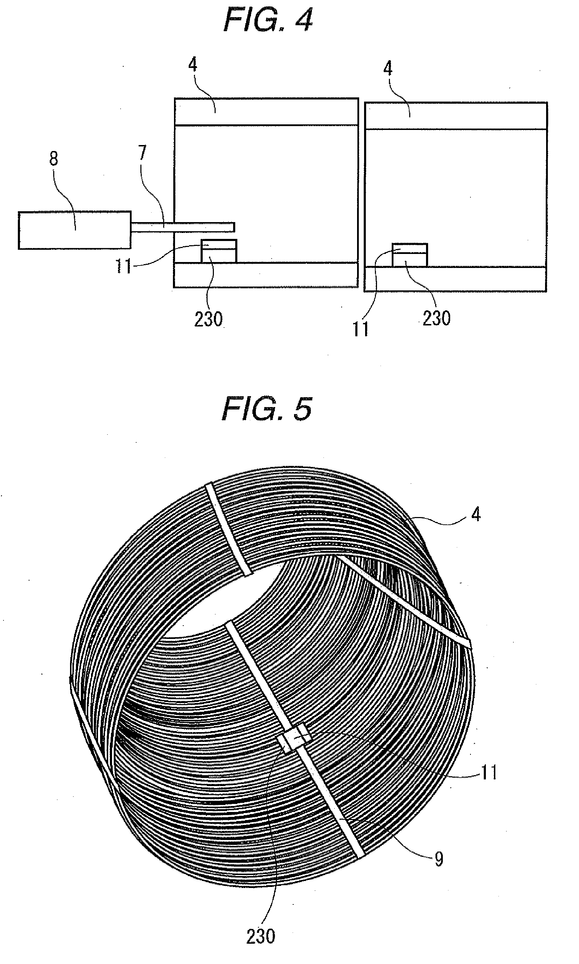

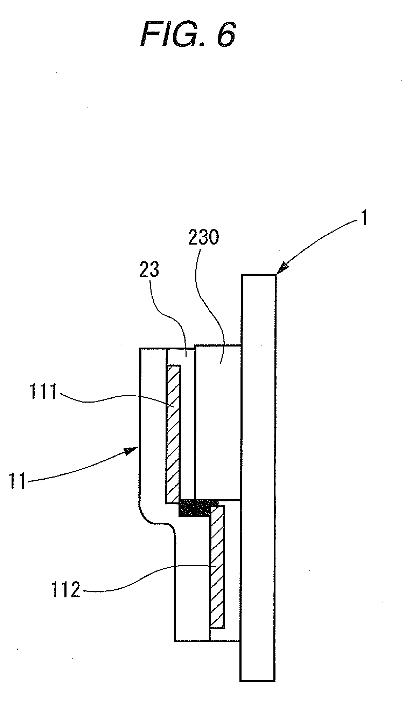

Hereinafter, embodiments of the present invention will be described with reference to the accompanying drawings, which will contribute to an understanding of the present invention. Note that the following embodiments are one set of examples in which the present invention is concretized, and do not limit the technical scope of the present invention.
Herein, FIG. 1 is a schematic diagram illustrating the configuration of the present invention in a case in which an RFID tag is attached so as to be in a direction along a circumferential direction of a cylindrical metal body to an inner side of the cylindrical metal body, FIG. 2 is a schematic diagram illustrating the configuration of the present invention in a case in which the RFID tag is attached so as to be parallel to a central axis of the cylindrical metal body to the inner side of the cylindrical metal body, FIG. 3 is a schematic diagram showing a situation in which the RFID tag in the configuration of the present invention is irradiated with a radio wave of an RFID reader antenna from the outside of the cylindrical metal body, FIG. 4 is a schematic diagram showing a situation in which a crane arm on which the RFID reader antenna is attached to its leading end is inserted into a plurality of coaxial cylindrical metal bodies to detect RFID tags in order, FIG. 5 is a photograph in which an RFID tag is mounted via a spacer on a hoop inside a steel wire rod coil bound by four hoops, and FIG. 6 is a sectional view showing a state in which an RFID tag is mounted in a conventional embodiment.

FIG. 1 is a configuration diagram of a structure for attaching an RFID tag according to one embodiment of the present invention.
As shown in the drawing, a spacer 230 having a thickness of approximately 13 mm, which is formed of a low-dielectric material such as foamed polyethylene or foamed polystyrene is installed to an inner side of a hollow cylindrical metal body 4, and an RFID tag 11 is attached so as to sandwich the spacer 230 therebetween such that its longitudinal direction (a direction of an electric field of a radio wave to be emitted) is along the circumferential direction of the hollow cylindrical metal body 4.
In this example, the RFID tag 11 is attached in the circumferential direction of the hollow cylindrical metal body 4. However, the RFID tag 11 may be attached in a direction along the central axis of the hollow cylindrical metal body 4 as shown in FIG. 2.
FIG. 2 is a configuration diagram of a structure for attaching an RFID tag according to another embodiment of the present invention.
With the spacer 230 having a thickness of approximately 13 mm, which is formed of a low-dielectric material such as foamed polyethylene or foamed polystyrene at the inner side of the hollow cylindrical metal body 4 being sandwiched therebetween, the RFID tag 11 is attached such that its longitudinal direction (a direction of an electric field of a radio wave to be emitted) is parallel to the central axis.
In this example, the low-dielectric material is used as the spacer 230. However, the spacer 230 may be a magnetic body as another material.

In the example of FIG. 3, an RFID reader 5 is placed on the left side of the hollow cylindrical metal body 4 in the drawing, and an RFID reader antenna 7 and the RFID reader 5 are connected to one another with a coaxial cable 6, and the RFID tag 11 in the hollow cylindrical metal body 4 is irradiated with a radio wave from the RFID reader antenna 7 from the outside.
An electric field of the radio wave irradiated from the RFID reader antenna 7 is directed to a direction perpendicular to a traveling direction of the radio wave, and because the traveling direction is parallel to the central axis of the hollow cylindrical metal body 4, an electric field inside the hollow cylindrical metal body 4 is generated in a direction perpendicular to the central axis, i.e., in a circumferential direction and a radial direction.
Therefore, when the RFID tag 11 is attached such that its longitudinal direction (the direction of an electric field of a radio wave to be emitted) is along the circumferential direction as shown in FIG. 1, it is possible to efficiently receive a radio wave from the antenna 7. However, when the RFID tag 11 is attached such that its longitudinal direction (the direction of an electric field of a radio wave to be emitted) is parallel to the central axis as shown in FIG. 2, it can hardly receive a radio wave from the antenna 7.

In an experiment, a steel wire rod coil having a weight of 2 tons has been used as the hollow cylindrical metal body 4, foamed polyethylene having a thickness of 13 mm has been used as the spacer 230, and a UHF-band RFID card-type tag by FUJITSU FRONTECH LIMITED has been used as the RFID tag 11, and the RFID tag 11 has been attached to a position on the inner side by 30 cm from the end of the hollow cylindrical metal body 4. Moreover, a UHF-band RFID reader by FUJITSU FRONTECH LIMITED has been used as the RFID reader 5, a cable manufactured by FUJITSU LIMITED having a length of 3 m has been used as the coaxial cable 6, and a circular polarized antenna manufactured by FUJITSU LIMITED has been used as the RFID reader antenna 7. In the case of the disposition of FIG. 1, the RFID tag 11 at the inside even at a distance of 180 cm from the hollow cylindrical metal body 4 has been able to be detected.
Note that, provided that the RFID tags 11 are attached so as to be in the above-described disposition to two steel wire rod coils, and the two steel wire rod coils are aligned so as to bring the central axes into line, the two RFID tags 11 can be simultaneously detected.
In the case in which the RFID tag 11 has been changed in its direction so as to be in the disposition of FIG. 2, when the antenna 7 has been made to approach a position of 20 cm or less from the hollow cylindrical metal body 4, or the antenna 7 has been inserted into the hollow cylindrical metal body 4, the RFID tag 11 at the inside thereof has been able to be recognized.
Note that, in the case in which the spacer 230 has been omitted, and the RFID tag 11 has been directly pasted in the hollow cylindrical metal body 4, even when the antenna 7 has been inserted into the hollow cylindrical metal body 4, the RFID tag 11 has not been able to be recognized.
In this way, by adopting the method for attaching an RFID in FIG. 1, it is possible to easily recognize the RFID tag 11 by the external RFID reader antenna 7.

Another embodiment of the present invention will be described with reference to FIG. 4.
FIG. 4 is a diagram showing a method for recognizing an RFID tag according to another embodiment of the present invention.
In FIG. 4, a plurality of the hollow cylindrical metal bodies 4 are aligned such that the central axes are brought in line, and the RFID tags 11 are attached to the insides thereof in the same way as in FIG. 2, such that the longitudinal direction of the RFID tags 11 (the direction of an electric field of a radio wave to be emitted) is parallel to the central axis.

The long and thin RFID reader antenna 7 protrudes from the leading end of the crane arm 8 for moving wire rod coils having a length of 4 m on the left side, and, in order to transfer the plurality of wire rod coils (hollow cylindrical metal bodies 4) on the right side at a time, the crane arm 8 is inserted into the center of the wire rod coils by moving from the left side to the right side.
The RFID reader antenna 7 is a long and thin antenna such as a UHF-band dipole antenna, and the direction of an electric field of a radio wave to be emitted therefrom is parallel to the central axis, and the RFID reader antenna 7 uniformly emits radio waves in a radial direction of a circle centering on the antenna.
Because the RFID tags 11 inside the hollow cylindrical metal bodies 4 are attached such that the longitudinal direction of the RFID tags 11 (the direction of an electric field of a radio wave to be emitted) is parallel to the central axis in the same way as in FIG. 2, the RFID tags 11 are unresponsive to a radio wave from an external RFID reader. However, when the RFID reader antenna 7 inserted into those reaches a point directly above the RFID tag 11, the directions of the electric fields of the radio waves are brought in line, which enables the RFID reader antenna 7 to detect the RFID tag 11.

When the RFID tag 11 is disposed as in FIG. 2, because the RFID tag 11 is detected only when the RFID reader antenna 7 reaches a point directly above the RFID tag 11, it is possible to detect the RFID tags 11 one by one in the order in which the crane arm 8 is inserted.
Therefore, there is a great advantage that the crane arm 8 for moving wire rod coils is capable of recognizing in what order the wire rod coils to which the RFID tags 11 are attached are aligned.
In this way, by using the method for attaching an RFID of FIG. 2, it is possible to selectively detect only specific RFID tags 11, and by using the method for attaching an RFID tag in FIG. 1, it is possible to detect the distant RFID tags 11 at one time from the outside.

Yet another embodiment of the present invention will be described with reference to FIG. 5.
FIG. 5 is a photograph showing a state in which an RFID tag is mounted in a wire rod coil.
One corresponding to the hollow cylindrical metal body 4 is a steel wire rod coil 4, which is bound by four steel binding hoops 9 having a width of 32 mm and a thickness of 0.7 mm.
The spacer 230 formed of foamed polyethylene having a thickness of 13 mm is bonded to a position on the inner side by 30 cm of the binding hoop 9, and the plastic card-type RFID tag 11 manufactured by FUJITSU FRONTECH LIMITED is attached thereon so as to be parallel to the central axis.
Except for the point that the RFID tag is attached to the hoop binding the coil, this embodiment is exactly the same as the embodiment of FIG. 2.
With respect to the wire rod coil, because the wire rods move due to vibrations and the like at the time of moving, when the wire rod coil is moved in a state in which the RFID tag is bonded directly to the steel wire rods, the positional relationships of the wire rods to one another may be changed due to vibrations and the like therefrom, and the RFID tag may be pinched between the wire rods to be broken or torn off. However, if the RFID tag is attached to the steel binding hoop 9, concern that the RFID tag is damaged by the wire rods is eliminated.
In this way, in the structure for attaching an RFID tag according to the present embodiment, because the RFID tag is disposed such that its longitudinal direction is in a direction along the circumference via the spacer at the inner side of the hollow cylindrical metal body, it is possible to avoid damage to the RFID tag, and it is possible to easily detect the RFID tag from the external reader.

## Claims

1. A structure for attaching an RFID tag comprising:
a hollow cylindrical metal body;
a spacer which is provided on a surface of an inner circumference of the cylindrical metal body; and
an RFID tag which is attached to the inner circumference of the cylindrical metal body via the spacer such that a direction of an electric field to be generated is substantially parallel to a circumference of the cylindrical metal body.

2. A structure for attaching an RFID tag comprising:
a hollow cylindrical metal body;
a spacer which is provided on a surface of an inner circumference of the cylindrical metal body; and
an RFID tag which is attached to the inner circumference of the cylindrical metal body via the spacer such that a direction of an electric field to be generated is substantially parallel to a central axis of the cylindrical metal body.

3. A structure for attaching an RFID tag comprising:
a hollow cylindrical metal body;
a hoop material that binds the hollow cylindrical metal body;
a spacer which is provided on an inner side of the cylindrical metal body and a top surface of the hoop material; and
an RFID tag which is attached to an inner circumference of the cylindrical metal body via the spacer such that a direction of an electric field to be generated is substantially parallel to a circumference of the cylindrical metal body.

4. A structure for attaching an RFID tag comprising:
a hollow cylindrical metal body;
a hoop material that binds the hollow cylindrical metal body;
a spacer which is provided on an inner side of the cylindrical metal body and a top surface of the hoop material; and
an RFID tag which is attached to the inner circumference of the cylindrical metal body via the spacer such that a direction of an electric field to be generated is substantially parallel to a central axis of the cylindrical metal body.

5. The structure for attaching an RFID tag according to any of claims 1 to 4, wherein the cylindrical metal body is a wire rod coil or a thin plate coil.

6. A method for detecting an RFID tag comprising a step of inserting an RFID reader antenna into a hollow cylindrical metal body to detect an RFID tag attached to an inner side of the cylindrical metal body.

7. A method for detecting an RFID tag comprising:
a step of disposing a plurality of hollow cylindrical metal bodies such that central axes thereof are coaxially set; and
a step of inserting an RFID reader antenna into the plurality of hollow cylindrical metal bodies to detect RFID tags attached to inner sides of the cylindrical metal bodies in the order in which the cylindrical metal bodies are aligned.
